Europäisches Patentamt

European Patent Office

Office européen des brevets

(19)

(11) Veröffentlichungsnummer: **0 340 644 B1**

(12) **EUROPÄISCHE PATENTSCHRIFT**

(45) Veröffentlichungstag der Patentschrift: **28.10.92**

(21) Anmeldenummer: **89107670.5**

(22) Anmeldetag: **27.04.89**

(51) Int. Cl.⁵: **A62D 3/00**, C03C 1/00, C03C 13/06, C21B 3/04, C22B 7/02

(54) Verfahren zur Beseitigung und zum Recycling von Abfallstoffen.

(30) Priorität: **28.04.88 DE 3814398**

(43) Veröffentlichungstag der Anmeldung:
**08.11.89 Patentblatt 89/45**

(45) Bekanntmachung des Hinweises auf die
Patenterteilung:
**28.10.92 Patentblatt 92/44**

(84) Benannte Vertragsstaaten:
**BE DE FR GB IT NL**

(56) Entgegenhaltungen:
**DE-A- 2 346 608
DE-A- 2 946 408
DE-A- 3 711 353
US-A- 4 365 984
US-A- 4 725 307**

(73) Patentinhaber: **COBOMAT ANLAGENBAU GMBH
Bunsenstrasse 9c
W-3013 Barsinghausen 1(DE)**

(72) Erfinder: **Steinheider, Winfried, Dipl.-Ing.
Bergstrasse 32a
W-3013 Barsinghausen(DE)**

(74) Vertreter: **Patentanwälte Wenzel & Kalkoff
Flasskuhle 6 Postfach 2448
W-5810 Witten(DE)**

EP 0 340 644 B1

## Beschreibung

Die Erfindung betrifft ein Verfahren zur Beseitigung und zum Recycling von Abfallstoffen, insbesondere giftigen Abfallstäuben, wobei die Abfallstoffe in einem Schlackeprodukt eingeschlossen werden, das aus beim Betrieb eines Schmelzofens wie einem Hochofen, Stahlofen etc. anfallender Schlacke besteht.

Ganz allgemein geht es hierbei um die Behandlung von Sondermüll, und zwar insbesondere um industrielle Filterstäube, in denen durch Trokkenoder Naß-Absorption anorganische und organische Schadstoffe an Kalk gebunden vorliegen.

Bisher werden solche Abfallstoffe, insbesondere giftige Abfallstoffe, wie sie in allen Zweigen der Industrieproduktion anfallen, in Sondermüll-Deponien eingelagert oder mittels Hochtemperatur-Verbrennungsanlagen behandelt.

Bei der Verbrennung hochgiftiger Abfallstoffe wird bisher im wesentlichen nur eine Volumenverringerung d.h. eine Konzentration der hochgiftigen Stoffe bewirkt, ohne daß eine Beseitigung erreicht wird. Nach neuestem Stand der Technik werden schadstoffhaltige Schlacken aus Müllverbrennungsanlagen zwar verschlackt, jedoch eine wirtschaftlich interessante Nutzung des Abfallproduktes ist nicht gegeben.

Das Deponieren schadstoffhaltiger Abfälle ist aufgrund der Wasserlöslichkeit dieser Stoffe nur dort möglich, wo die geologischen Voraussetzungen wie schichtstarke Tonvorkommen bzw. Salzstöcke eine Verunreinigung des Grundwassers ausschließen. Außerdem müssen hierbei die erheblichen Gefahren beim Transport sowie beim Einlagern solcher Abfallstoffe berücksichtigt werden. Insgesamt ist dieses Verfahren daher mit sehr hohem Aufwand verbunden.

Nach einem bekannten Verfahren (DE-A-2 946 408) der eingangs genannten Art werden staubförmige Abfallstoffe, die umweltschädliche Metalle enthalten können und beseitigt werden sollen, in Hochofenschlacke, Stahlofenschlacke etc. eingemischt, die nach dem Erkalten und Erstarren zu Straßenbaumaterial weiterverarbeitet werden kann. In einem Beispiel wird zu diesem Verfahren angegeben, daß die Stäube dem aus dem Hochofen austretenden flüssigen Schlackestrom (1400° C) in einer Menge von 25% zugesetzt werden. Die metallhaltigen Stäube sollen beim Einmischen in die Schlacke schmelzen und so in dieser eingeschlossen werden. Zur Erhöhung der Rauhigkeit des durch Brechen, Mahlen od. dgl. der erstarrten Schlacke hergestellten Straßenbaumaterials werden die staubförmigen Abfallstoffe mit einer 10%-igen Sandbeimischung in die Schlacke eingegeben.

Die Beseitigung von Schadstoffen nach diesem bekannten Verfahren bedingt hohe Kosten, weil beispielsweise aus Hochofenschlacke hergestelltes Straßenbaumaterial als geringwertiger und entsprechend preisgünstiger Baustoff gilt.

Gewöhnliche Schlacke wie beispielsweise Hochofenschlacke (basisch) eignet sich auch nicht zum unlöslichen Einschließen von Abfallstoffen. Denn durch die Brüchigkeit der basischen Schlakke wird verhindert, daß hochgiftige Restbestände auf Dauer unlösbar vernichtet bzw. eingeschlossen werden. Es besteht daher die Gefahr einer Bodenkontaminierung, wenn in dieser Weise mit Giftstoffen versetztes Straßenbaumaterial in nicht abgeschlossenen Bodenbereichen verwendet wird. Hierfür ist neben der Schlackenzusammensetzung maßgeblich, daß ein hoher Anteil von Abfallstäuben nur mit unverhältnismäßig hohem technischen Aufwand so in den Schlackenstrom eingegeben werden kann, daß eine weitgehend homogene Mischung entsteht.

Die Aufgabe der Erfindung ist daher auf ein Verfahren zur Beseitigung von Abfallstoffen gerichtet, das unter Vermeidung oder Reduzierung der vorstehend genannten Nachteile eine vor allem wirtschaftliche und umweltfreundliche Beseitigung von Schadstoffen zuläßt.

Diese Aufgabe wird erfindungsgemäß dadurch gelöst, daß die feinkörnig oder staubförmig aufbereiteten Abfallstoffe zur Verschlackung mit Bindemitteln, vor allem Sand ($SiO_2$) und gegebenenfalls Kalk, versehen dem Schmelzofen, insbesondere einem Schachtofen wie Hochofen oder Kupolofen oder einem Trommelofen, in dem ein Metallschmelzvorgang stattfindet, im Bereich der Schmelzzone durch Einblasen zugeführt und beim Durchlaufen der Schmelzzone durch chemische Umwandlung an die einen hohen Quarzanteil aufweisende Schlacke gebunden werden, die am Schlackenabstich des Schlackenaggregates abgezogen und unmittelbar zu elastisch biegsamer Glaswolle verblasen wird, in der die Abfallstoffe im wesentlichen molekular gebunden und unlöslich eingeschlossen sind, wobei der Quarzanteil der Schlacke durch einen entsprechend hohen Quarzanteil der in die Schmelzzone eingeführten Bindemittel oder der zu behandelnden Abfallstoffe selbst etwa im Bereich von 45 bis 70 Gew.% liegt und vorzugsweise zwischen 55 und 60 Gew.% beträgt.

Die Erfindung beschreitet somit einen neuen Weg der Schadstoffbeseitigung durch Benutzung herkömmlicher Metallschmelzprozesse, die mit Schlackenbildung verbunden sind. Die Abfallstoffe, beispielsweise Industrie-Filterstäube, in denen anorganische und organische Schadstoffe zu einem Anteil von max. 20% an Kalk gebunden vorliegen (Schwermetalle, Halogene, Kohlenwasserstoffe usw.), werden mit einem Zusatz von $SiO_2$, z.B. in Form von Sand, sowie mit einem Aufheizmittel in Form von Koks- oder Kohlenstaub, bzw. Stadtgas oder Erdgas in die Schmelzzone eines herkömmlichen Schmelzofens eingeführt.Der Zusatz von Kalk als Bindemittel ist nur dort erforderlich, wo nicht bereits durch die Art bzw. Herkunft der Abfallstoffe ein ausreichender Kalkanteil vorhanden ist. Beispielsweise bei der Behandlung giftiger Filterstäube liegt meistens bereits ein Kalkanteil von 85 bis 90% vor, so daß ein gesonderter Kalkzusatz entfallen kann. Die Zusatzstoffe sind unter Berücksichtigung der Zusammensetzung des Einsatzes des Schmelzofens so gewählt, daß sich beim Durchlaufen der Schmelzzone eine stark saure, nämlich hochquarzhaltige Schlacke bildet. Diese wird abgezogen und derart zu Glaswolle verblasen, daß eine elastisch biegsame Glasfaser entsteht, in der die Restgiftstoffe unlöslich eingeschlossen sind. Zur Erzeugung der Glaswolle werden nach dem Stand der Technik bekannte Aggregate wie Wannenofen usw. eingesetzt, jedoch wird die Glaswolle verblasener Schlacke derart abgekühlt, daß sie elastisch biegsam bleibt.

Die chemische Einbindung und das Einschließen der Giftstoffe in eine elastisch biegsame Glasfaser bewirkt eine sichere Beseitigung der Giftstoffe, weil diese weder mechanisch noch chemisch aus der Glasfaser heraustrennbar bzw. herauslösbar sind. Denn die Glasfaser ist allenfalls in Flußsäure, die in der Natur nicht vorkommt, löslich. Die Elastizität der Glasfaser macht sie gegen einen mechanischen Angriff weitgehend widerstandsfähig.

Die Glasfaser läßt sich in bekannter Weise zu Glaswollmatten, d.h. zu Baustoffen weiterverarbeiten.

Auf diese Weise wird erfindungsgemäß nicht nur das Volumen der Abfallstoffe durch Verbrennen in der Schmelzzone verringert, sondern es erfolgt auch gleichzeitig eine Beseitigung durch Einschließen bzw. Einbinden der Restgiftstoffe in der Glasfaser. Die bei der Einbindung entstehende Glaswolle wird zu Baustoff weiterverarbeitet, so daß mit der Beseitigung der Abfallstoffe erfindungsgemäß auch eine Wertschaffung verbunden ist, wodurch die Wirtschaftlichkeit des Verfahrens herbeigeführt wird.

Die Hauptbindemittel, nämlich Sand und Kalk, stehen praktisch unbegrenzt zur Verfügung. Hochofenprozesse oder andere Metallschmelzverfahren im Kupolofen oder auch im Trommelofen gibt es ebenfalls in großer Zahl, so daß auch unter diesem Gesichtspunkt die Erfindung auf bereits vorhandene Einrichtungen zurückgreifen kann, die jedoch entsprechend anzupassen sind.

Hochöfen und Kupolöfen haben den Vorteil, daß die in die Schmelzzone eingeführten Abfallstoffe ohne Entstehung eines wesentlichen gasförmigen Anteils unmittelbar vom festen in den flüssigen Aggregatzustand übergehen. Der Trommelofen weist demgegenüber andere Vorteile auf.

Es liegt auf der Hand, daß die Erfindung zur Beseitigung sehr verschiedenartiger Abfallstoffe einsetzbar ist. Außer den bereits genannten giftigen Abfallstäuben, insbesondere Filterstäuben, sei an dieser Stelle lediglich auf die Behandlung kontaminierter Böden hingewiesen, bei denen der Quarzanteil von Natur aus bereits sehr hoch ist und beispielsweise 50 Prozent beträgt, so daß der Quarzzusatz bei der Vermischung der Abfallstoffe mit Bindemitteln entsprechend gering bemessen sein kann. Zur Erzeugung elastisch biegsamer Glaswolle ist jedoch ein hoher $SiO_2$-Anteil der Schlacke in jedem Falle unerläßlich, so daß die Schlackenzusammensetzung in dem bekannten Dreistoffsystem $SiO_2$-$CaO$-$Al_2O_3$ im oberen Bereich unterhalb der $SiO_2$-Spitze liegen soll.

Gegenüber allen bisher bekannten Verfahren zur Abfallstoffbeseitigung zeichnet sich das erfindungsgemäße Verfahren durch seine Einbeziehung in der Erschmelzung von Metallen dienende Prozesse und insbesondere wegen der Einschließung der Restgiftstoffe in ein hochwertiges Baumaterial durch eine bisher einzigartige Wirtschaftlichkeit aus, die im weiteren Verlauf der Beschreibung noch durch Beispiele verdeutlicht wird.

Für die Bildung einer zur Herstellung elastisch biegsamer Glasfasern geeigneten Schlacke liegt der Quarzanteil der Schlacke erfindungsgemäß, wie vorstehend bereits augegeben, durch einen entsprechend hohen Quarzanteil der in die Schmelzzone eingeführten Bindemittel oder der zu behandelnden Abfallstoffe selbst etwa im Bereich von 45 bis 70 Gew.% und beträgt vorzugsweise zwischen 55 und 60 Gew.%. Der Quarzanteil der zu Glasfasern zu verblasenden Schlacke bestimmt sich durch den Anteil, der in den Einsatzstoffen des Schmelzofens vorhanden ist und durch den weiteren Anteil der in die Schmelzzone direkt eingeführten Stoffe. Der Quarzanteil der letztgenannten Stoffe ist folglich entsprechend zu wählen, damit der Quarzanteil der zu verblasenden Schlacke in den vorgenannten Bereichen liegt.

Erfindungsgemäß soll der Anteil der organischen und anorganischen Restgiftstoffe in der Schlacke möglichst im Bereich von 0,5 bis 2 Gew.% liegen und maximal 10 Gew.% betragen. Bei Einhaltung der genannten Werte ist eine sichere chemische und mechanische Einbindung der Giftstoffe in die Glasmasse und damit in die Glasfaser gewährleistet. Vorgezogen wird ein Maximum von 3 Gew.%.

Grundsätzlich wird erfindungsgemäß angestrebt, daß die Abfallstoffe zusammen mit den Bindemitteln durch Anwendung von Primärenergie der Schmelze zur Herstellung von Glaswolle vorbereitet und verblasen werden.

Wenn der in die Schmelzzone des Ofens einzuführende Anteil der Abfallstoffe relativ hoch liegt oder aus anderen Gründen zu seiner Erschmelzung verhältnismäßig viel Energie verbraucht, ist es zweckmäßig, daß die Abfallstoffe erfindungsgemäß mit exothermen Abfallstoffen und/oder weiteren Brennstoffen wie z.B. Kohlenstaub, Stadtgas oder Erdgas versetzt werden, um einem Absinken der Temperatur in der Schmelzzone durch Aufheizung und Umwandlung der Abfallstoffe sowie insbesondere der zugeführten Bindemittel entgegenzuwirken.

Die Größe des Anteils der zu dem Schmelzprozeß zuführbaren Abfallstoffe einschließlich Bindemitteln etc. hängt von dem jeweiligen Schmelzprozeß ab. Der Anteil der zugeführten Abfallstoffe, Bindemittel und Brennstoffe sollte erfindungsgemäß max. 50 Gew.% des Gesamtdurchsatzes, bestehend aus Metallschmelze und Schlacke, betragen und möglichst im Bereich von 15 bis 28 Gew.% liegen. Bedingt durch die Umstände beispielsweise durch einen geringeren Anfall an Abfallstoffen oder bedingt durch deren Art, kann der vorgenannte Bereich auch unter 15 Gew.% betragen.

Eine leichte Zuführbarkeit der Abfallstoffe bietet sich erfindungsgemäß dadurch an, daß die Abfallstoffe nach entsprechender Aufbereitung und gegebenenfalls Vermischung mit entsprechend aufbereiteten Bindemitteln und Brennstoffen mittels pneumatischer Förderung in die Schmelzzone des Schmelzvorganges eingeblasen bzw. eingeführt werden. Das Einblasen der Abfallstoffe kann sowohl durch Beimischung zur Verbrennungsluft als auch duch getrennte Luftförderung erfolgen.

Je nach Art des für die Durchführung des Verfahrens benutzten Schmelzofens sowie insbesondere in Abhängigkeit von der Art der zu beseitigenden Abfallstoffe können giftige Rauchgase in der Schmelzzone entstehen und aufsteigen. Deshalb ist erfindungsgemäß vorgesehen, daß die Rauchgase des Schmelzofens, wenn sie mit Anteilen der zugeführten Abfallstoffe versetzt sind, einem mehrstufigen Reinigungsprozeß unterworfen werden, wobei dem üblichen Reinigungsprozeß durch Filtration für den alkalischen und für den sauren Gasbereich je eine Stufe einer 2-stufigen Naßabsorption nachgeschaltet ist.

Erfindungsgemäß soll die Herstellung der Glasfasern so erfolgen, daß die Fadendicke der Glaswolle bzw. Glasfasern mindestens 1 mm beträgt.

Vorzugsweise werden die Glasfasern im Düsenblasverfahren hergestellt und anschließend im bereits erwähnten Abkühlverfahren, das die Erhaltung der elastischen Biegsamkeit zuläßt, unterworfen.

Das erfindungsgemäße Verfahren zeichnet sich ferner dadurch aus, daß die Abfallstoffe im Niedertemperaturbereich mit max. 450°C unter Sauerstoffmangel zur Vermeidung einer Dioxinentstehung erhitzt und die dabei entstehenden Abgase abgezogen werden, die zur Beheizung von Schmelzaggregaten bzw. allgemeinen Wärmeverbrauchern genutzt werden können. Schließlich ist eine Variante bzw. Alternative der Erfindung dadurch gekennzeichnet, daß die Abfallstoffe mindestens teilweise zur einwandfreien Überführung in den Schlackenzustand brikettiert und den Einsatzstoffen des Schmelzofens zugegeben werden.

Zu dem erfindungsgemäßen Verfahren werden nachstehend mit Bezug auf den Tabellen- und Zeichnungsteil weitere Erläuterungen gegeben.

Fig. 1     ist eine tabellarische Übersicht, genannt "Überschlag - Wirtschaftlichkeit" mit Zahlenmaterial zur wirtschaftlichen Seite des erfindungsgemäßen Verfahrens;

Fig. 2     ist ein Fließbild zur Veranschaulichung des Anfallens, der Aufbereitung, der Mischung sowie der Zuführung von Abfallstoffen zu einem Schachtofen mit anschließender Glaswolle-Produktion;

Fig. 3     ist ein Fließbild eines Rauchgasreinigungsprozesses in Verbindung mit dem erfindungsgemäßen Verfahren;

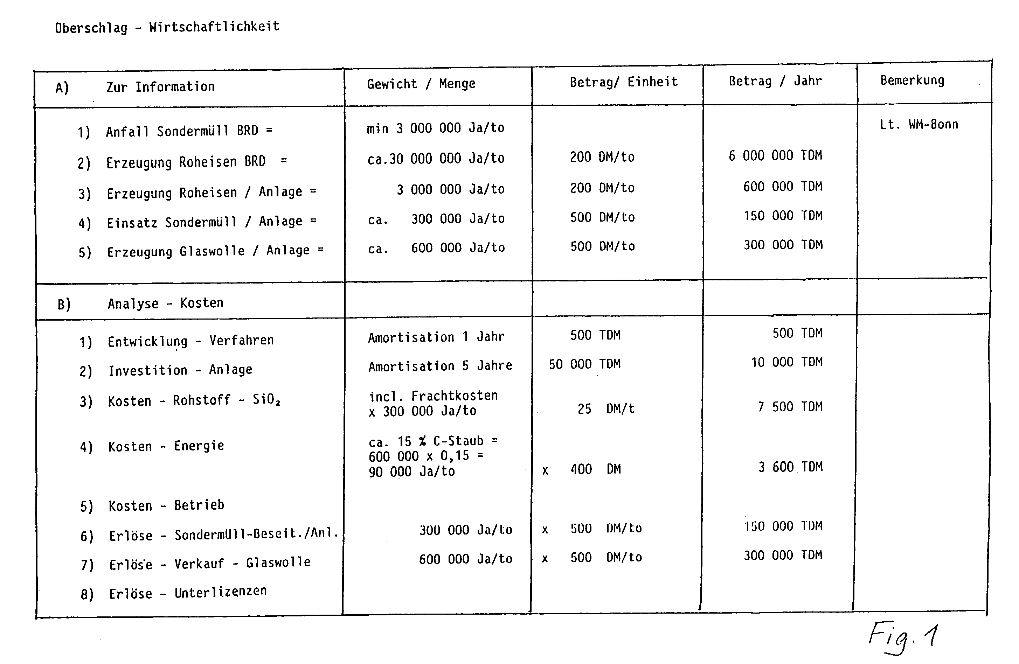

Die in der Tabelle von Fig. 1 angegebenen Werte veranschaulichen die Erhöhung der Rentabilität der Roheisengewinnung durch gleichzeitige Beseitigung von Abfallstoffen bzw. Sondermüll nach dem erfindungsgemäßen Verfahren.

Im Abschnitt (A) geht aus der Spalte Betrag/Einheit hervor, daß der Erlös bei der Roheisenerschmelzung heute bei etwa 200 DM/to liegt. Bei Verarbeitung von ca. 300.000 Ja/to Sondermüll pro Schachtofenanlage, was einem 10tel der Roheisengewinnung von 3 000 000 Ja/to entspricht, ergibt sich bei einem Betrag von 500 DM/to für die Sondermüllbeseitigung ein Mehrerlös allein durch die Beseitigungsbeträge von 150 000 TDM. Ein weiterer Mehrerlös fällt durch die angegebene Erzeugung von Glaswolle von ca. 600 000 Ja/to im Wert von 300 000 TDM an. Einem Normalerlös für die Roheisenerzeugung von 600 000 TDM unter Zugrundelegung einer Roheisenerschmelzungsanlage mit durchschnittlicher Kapazität steht folglich ein Gesamtmehrerlös von 450 000 TDM gegenüber.

Im Abschnitt (B) der Tabelle von Figur 1 sind geschätzte Kosten für die praktische Anwendung des erfindungsgemäßen Verfahrens angegeben. Hier stehen in der letzten Spalte "Betrag/Jahr" den Kosten für die weitere Entwicklung des Verfahrens zur Praxisreife, dem jährlichen Anteil der auf 5 Jahre verteilten Investitionskosten für die Anpassung und Umrüstung einer Anlage, ferner den Rohstoff-und den Energiekosten die möglichen Erlöse sowohl für die Sondermüllbeseitigung als auch für den Verkauf der Glaswolle gegenüber. Den Energiekosten liegt die Annahme zugrunde, daß ein Anteil von 15% Kohlenstaub zur Erhaltung des notwendigen Temperaturniveaus in der Schmelzzone beim Einführen der Abfallstoffe notwendig ist. Auch wenn Angaben über die Kosten für den Betrieb der Anlage bezüglich des auf die Abfallstoffbeseitigung bezogenen Teils der Anlage fehlen, wird die hohe Wirtschaftlichkeit des erfindungsgemäßen Verfahrens bereits aus den vorhandenen Daten ersichtlich. Auch zusätzliche Erlöse aus Unterlizenzen sind, wie die Tabelle zeigt, möglich, auch wenn hierfür keine Beträge beziffert sind.

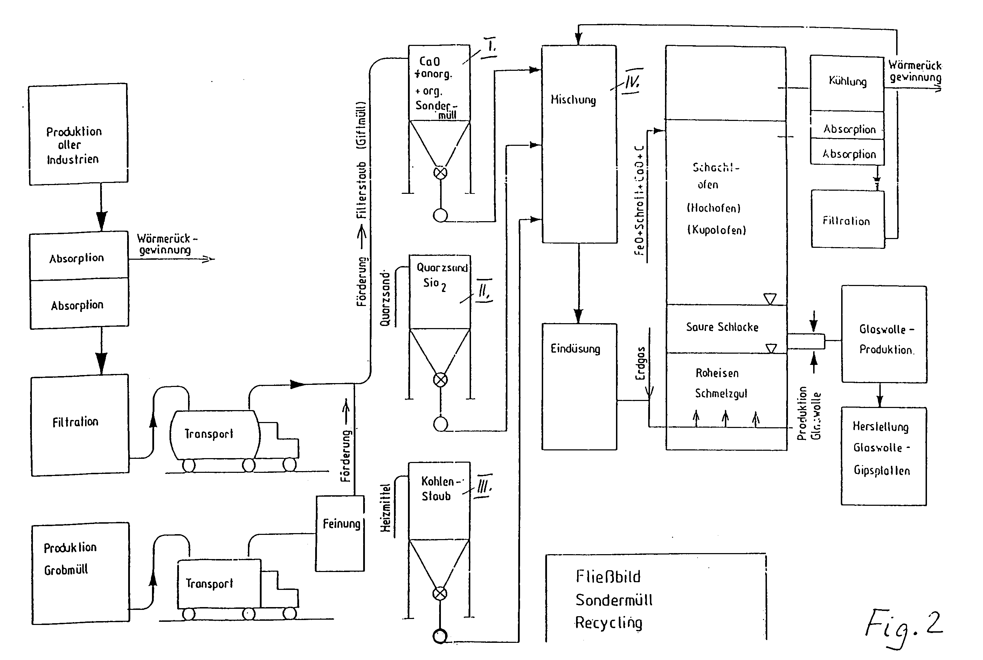

Das Fließbild nach Fig. 2 zeigt im linken Teil die Entstehung der Abfallstoffe, oben staubförmig und unten mit gröberer Struktur, so daß sich im letzten Fall nach dem Transport eine Feinung anschließt. Als überwiegend feinkörniges Schüttgut erreichen die Abfallstoffe den hierfür im Bereich des Schmelzofens gelegenen Bunker I, um von hieraus dem Mischbunker IV zugeführt und mit entsprechenden Mengen an Quarzsand und Kohlenstaub aus weiteren Bunkern II bzw. III versetzt zu werden.

Nach diesem Aufbereitungsprozeß erfolgt die Eindüsung der so mit Bindemittel und Brennstoff angereicherten Abfallstoffe im Bereich der Schmelzzone des Schachtofens. Die Eindüsung erfolgt grundsätzlich in Höhe der üblichen Luftzuführung, beispielsweise im Falle eines Kupolofens in Höhe der vom Windmantel gespeisten Düsen im Bereich der Überhitzungszone, auf jeden Fall unterhalb der Schmelzzone, beispielsweise im Falle eines Hochofens unmittelbar durch die Windformen unterhalb der Rast, und zwar entweder über die ohnehin vorhandenen Düsen bzw. Windformen oder über zusätzlich in gleicher Höhe angeordnete Düsen. Nach Durchlaufen der Schmelzzone wird die entstehende saure Schlacke am Schlackenabstich des Schachtofens abgezogen und unmittelbar zu Glasfasern bzw. Glaswolle verblasen mit anschließender Herstellung entsprechender Baustoffe wie Glaswolle-Gipsplatten.

Die aufsteigenden Rauchgase, die mit Giftstoffen aus den Abfallstoffen versetzt sein können, werden einem Abscheidungsprozeß unterworfen. Die hierbei neutralisierten Gift- bzw. Abfallstoffe werden zweckmäßig unmittelbar zu dem Mischbunker IV zurückgeführt.

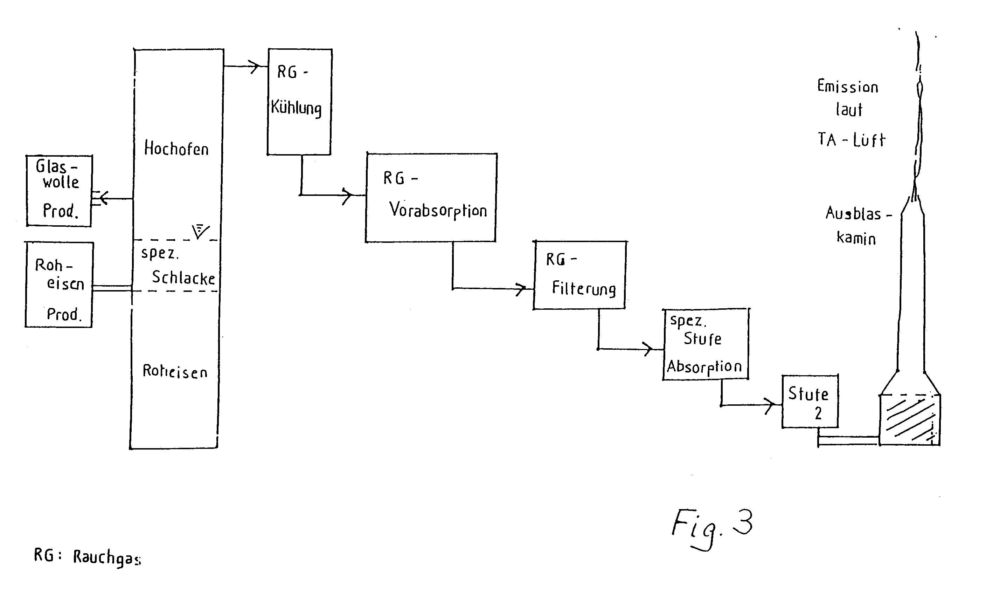

Die vorerwähnte Filterung der Rauchgase erfolgt zweckmäßig stufenweise, wie in Fig. 3 dargestellt ist.

Die im Bereich der Schmelzzone der jeweiligen Schmelzofenanlage mit Bindemitteln und Zusatzenergieträgern zugeführten Abfallstoffe werden in der Schmelzzone chemisch umgewandelt. Die in den Abfallstoffen enthaltenen Giftstoffe wie Chloride, Bromide, Fluoride usw. sowie Schwermetalle wie Blei, Cadmium, Zink usw. sind folglich in der sauren Schlacke chemisch gebunden, so daß sie von Wasser, Säuren, Laugen usw. nicht aus der Glasfaser, zu der die Schlacke verarbeitet wird, gelöst werden können. Für die chemische Umwandlung steht ein hoher Anteil Kalk und insbesondere Quarzsand bzw. allgemein $SiO_2$ in Form zugesetzter Bindemittel oder in Form entsprechender Anteile der Abfallstoffe zur Verfügung. An der Beseitigung der Giftstoffe hat daher das gewählte Mengenverhältnis einen entscheidenden Anteil.

Für die Herstellung der Glaswolle wird ein Düsenblasverfahren gewählt, das eine Fadendicke von mindestens 1 mm zuläßt. Organische und anorganische Restgiftstoffe werden in chemischer Bindung mit einem Anteil von 0,5 bis 2 Gew.% in der Glasfaser eingeschlossen. Die Abkühlung der Glasfasern beim Verblasen wird so gewählt, daß die Glaswolle aus elastisch biegsamen Fasern besteht, die gegenüber mechanischer Einwirkung besonders stabil sind.

Der Anteil der zusätzlich mit den Abfallstoffen der Schmelzzone zuzuführenden Energieträger richtet sich nach dem Anteil der insgesamt mit den Abfallstoffen zugeführten Zusatzstoffe im Verhältnis zur Menge des Ofeneinsatzes. In die Schmelzzone eingeblasene Abfallstäube, die organische Giftstoffe enthalten, dienen aufgrund ihrer exothermen Reaktion als Brennstoff, Kohlenstaub, Koks, Öl usw. reduziert werden können. Auch die Zuführung brikettierter Abfallstäube mit dem Ofeneinsatz ist möglich.

Auch andere Arten von Abfallstoffen wie z.B. Altgummi, Altkunststoff und Altöl können wie Abfallstaubbriketts beigemischt werden, um die gewünschte exotherme Reaktion zu erzielen.

Als konkretes Ausführungsbeispiel für die Beseitigung von Abfallstoffen nach dem erfindungsgemäßen Verfahren wird die Beseitigung von Filterstäuben aus einer Filteranlage mit Trockenkalk-Absorption genannt, wie sie üblicherweise an Aluminium-Schmelzöfen eingesetzt wird. Die in der Filteranlage anfallenden Filterstäube haben im wesentlichen eine Zusammensetzung von ca. 85 - 90 Gew.% Kalk, ca. 5 - 10 Gew.% Kohlenstoffverbindungen in Form von Ruß bzw. Kohlenwasserstoffen, ca. 2 - 8 Gew.% Halogene (Chloride, Bromide, Fluoride), die überwiegend chemisch an Kalk gebunden sind, sowie von Schwermetallen bis zu 5 Gew.%. Bei Anwendung des erfindungsgemäßen Verfahrens werden 45 Gew.% eines Filterstaubes dieser Zusammensetzung mit 50 Gew.% $SiO_2$ und 5 Gew.% Kohlenstaub vermischt und durch die Düsenreihe eines Kupolofens unterhalb der Schmelzzone eingeblasen. Der Kohlenstaub kann je nach Gewichtsverhältnis zu den Einsatzstoffen auch einen höheren Gew.%-Anteil z.B. 8 Gew.%

bei entsprechender Veränderung der Staub- und $SiO_2$-Anteile ausmachen. Auf jeden Fall wird eine hochsaure Schlacke erzielt, die sich ohne Schwierigkeiten zu elastischer Glaswolle verarbeiten läßt.

Die Schlacke wird nach dem Abstich aus dem Kupolofen einem Wannenofen zugeführt, wie er üblicherweise zur Schlacken- bzw. Glaswolle-Herstellung eingesetzt wird. Dieser Wannenofen hat eine Zusatzbeheizung, um die schmelzflüssige Schlacke auf genauer Temperatur zu halten. Mit nach dem Stand der Technik bekannten Blasdüsen wird die Schlacke nun zu Glasfasern verblasen und anschließend in einer beheizten Kammer aufgefangen, in der die für die Erzielung der gewünschten Elastizität der Glaswolle notwendige gleichmäßige Abkühlung der Glasfaser stattfindet.

Im Hinblick auf die Verwendung eines Trommelofens statt eines Schachtofens sei noch erwähnt, daß der Trommelofen im Gegensatz zu den Schachtöfen eine Befeuerung mit Erdöl zuläßt. Darüberhinaus ergibt sich aufgrund der horizontalen Lage des Trommelofens eine einfachere Beschickung mit Abfallstoffen, die deshalb beispielsweise jedenfalls zum Teil keiner Zerkleinerung in feinste Teilchen bedürfen, die ein Einblasen bzw. Eindüsen wie beim Schachtofen zulassen. Durch den Wegfall der Zerkleinerung jedenfalls mindestens eines Teils der Abfallstoffe reduzieren sich die Aufbereitungskosten entsprechend.

Die Filterung der Rauchgase sowohl bei den Schachtöfen als auch beim Trommelofen läuft vorzugsweise wie folgt ab (vergleiche auch Fig.3):

1. In der ersten Stufe wird ein Trockenabsorber benutzt, in den Kalk eingedüst wird, der sich sowohl mit den organischen als auch anorganischen Schadstoffen, die in den Rauchgasen enthalten sein können, jedenfalls teilweise in chemischer Reaktion verbindet. Teilweise findet eine Einlagerung statt.

2. In der zweiten Stufe werden die Rauchgase in einem Kühler einer Blitzkühlung unterworfen, während derer sie innerhalb kürzester Zeit von ca. 800°C auf etwa 100/120°C abgekühlt werden, und zwar zur Unterdrückung der Entstehung von Dioxinen. Hierfür kann sowohl ein Röhrchenkühler als auch ein Flächenkühler üblicher Bauart Verwendung finden.

3. Die Rauchgase gelangen nun in die Filteranlage, die als Schlauch- oder Flächenfilteranlage ausgeführt ist. Durch Anwendung von Filterschläuchen mit einer MF-Spezialbeschichtung wird eine Verklebung der Schläuche auch dann vermieden, wenn die Rauchgase wässrige Bestandteile mit sich führen, so daß hierdurch eine Naßreinigung möglich ist.

4. Nun folgt als Besonderheit eine zwei-stufige Neutralisation sowohl saurer als auch alkalischer Reststoffe, die in feinster Verteilung noch in den bereits gereinigten Rauchgasen vorliegen können.

Zur Abscheidung saurer Restteilchen und Restkohlenwasserstoffe wird eine Naßabsorption mit einem Gemisch aus Kalilauge, Wasser und Kalk angewendet. Diese trübe wässrige Lösung wird in der Absorberanlage mit einer Telleretten-Füllung (poröse Kunststoffringe, sog. Raschig-Ringe) versprüht.

In einer zweiten Stufe werden die alkalischen Restbestandteile durch ein Säuregemisch entfernt. Es finden aufgeheizte Säuren wie beispielsweise Phosphor-Schwefelsäure-Wassergemische Verwendung, und zwar mit angepaßten pHWerten. Die pH-Werte der Rauchgase werden kontinuierlich gemessen, um die Säuremischung entsprechend einstellen zu können, so daß die gewünschte Neutralisation erreicht wird. Am Ende werden die so gereinigten Rauchgase mittels eines oder mehrerer Ventilatoren durch den Auslaßkamin ins Freie befördert.

## Patentansprüche

1. Verfahren zur Beseitigung und zum Recycling von Abfallstoffen, insbesondere giftigen Abfallstäuben, wobei die Abfallstoffe in einem Schlackeprodukt eingeschlossen werden, das aus beim Betrieb eines Schmelzofens wie einem Hochofen, Stahlofen etc. anfallender Schlacke besteht, dadurch **gekennzeichnet,** daß die feinkörnig oder staubförmig aufbereiteten Abfallstoffe zur Verschlackung mit Bindemitteln, vor allem Sand ($SiO_2$) und gegebenenfalls Kalk, versehen, dem Schmelzofen, insbesondere einem Schachtofen wie Hochofen oder Kupolofen oder einem Trommelofen, in dem ein Metallschmelzvorgang stattfindet, im Bereich der Schmelzzone durch Einblasen zugeführt und beim Durchlaufen der Schmelzzone durch chemische Umwandlung an die einen hohen Quarzanteil aufweisende Schlacke gebunden werden, die am Schlackenabstich des Schlackenaggregates abgezogen und unmittelbar zu elastisch biegsamer Glaswolle verblasen wird, in der die Abfallstoffe im wesentlichen molekular gebunden und unlöslich eingeschlossen sind, wobei der Quarzanteil der Schlacke durch einen entsprechend hohen Quarzanteil der in die Schmelzzone eingeführten Bindemittel oder der zu behandelnden Abfallstoffe selbst etwa im Bereich von 45 bis 70 Gew.% liegt und vorzugsweise zwischen 55 und 60 Gew.% beträgt.

2. Verfahren nach Anspruch 1, dadurch **gekennzeichnet,** daß der Anteil der organischen und anorganischen Restgiftstoffe in der Schlacke möglichst im Bereich von 0,5 bis 2 Gew.% liegt und max. 10 Gew.% beträgt.

3. Verfahren nach Anspruch 1 oder 2, dadurch **gekennzeichnet,** daß die Abfallstoffe zusammen mit den Bindemitteln durch Anwendung von Primärenergie der Schmelze zur Herstellung von Glaswolle vorbereitet und verblasen werden.

4. Verfahren nach einem oder mehreren der vorhergehenden Ansprüche, dadurch **gekennzeichnet,** daß die Abfallstoffe mit exothermen Abfallstoffen und/oder weiteren Brennstoffen wie z.B. Kohlenstaub, Stadtgas, Erdgas versetzt werden, um einem Absinken der Temperatur in der Schmelzzone durch Aufheizung und Umwandlung der Abfallstoffe sowie insbesondere der zugeführten Bindemittel entgegenzuwirken.

5. Verfahren nach einem oder mehreren der vorhergehenden Ansprüche, dadurch **gekennzeichnet,** daß der Anteil der zugeführten Abfallstoffe, Bindemittel und Brennstoffe max. 50 Gew.% des Gesamtdurchsatzes, bestehend aus Metallschmelze und Schlacke, beträgt und möglichst im Bereich von 15 bis 28 Gew.% liegt.

6. Verfahren nach einem oder mehreren der vorhergehenden Ansprüche, dadurch **gekennzeichnet,** daß die Abfallstoffe nach entsprechender Aufbereitung und gegebenenfalls Vermischung mit entsprechend aufbereiteten Bindemitteln und Brennstoffen mittels pneumatischer Förderung in die Schmelzzone des Schmelzvorganges eingeblasen werden.

7. Verfahren nach Anspruch 6, dadurch **gekennzeichnet,** daß das Einblasen bzw. Einführen der Abfallstoffe und gegebenenfalls der weiteren damit vermischten Stoffe sowohl durch Beimischung zur Verbrennungsluft als auch durch getrennte pneumatische Förderung erfolgt.

8. Verfahren nach einem oder mehreren der vorhergehenden Ansprüche, dadurch **gekennzeichnet,** daß die Rauchgase des Schmelzofens, wenn sie mit Anteilen der zugeführten Abfallstoffe versetzt sind, einem mehrstufigen Reinigungsprozeß unterworfen werden, wobei dem üblichen Reinigungsprozeß durch Filtration für den alkalischen und für den sauren Gasbereich je eine Stufe einer 2-stufigen Naßabsorption nachgeschaltet ist.

9. Verfahren nach einem oder mehreren der vorhergehenden Ansprüche, dadurch **gekennzeichnet,** daß die Fadendicke der Glaswolle mindestens 1 mm beträgt.

10. Verfahren nach einem oder mehreren der vorhergehenden Ansprüche, dadurch **gekennzeichnet,** daß die Abfallstoffe mindestens teilweise zur einwandfreien Überführung in den Schlackenzustand brikettiert und den Einsatzstoffen zugegeben werden.

**Claims**

1. Process for removing and for recycling waste substances, in particular toxic waste dusts, in which the waste substances are occluded in a slag product which is composed of slag produced during the operation of a smelting furnace such as a blast furnace, a carburising furnace etc., characterised in that the waste substances prepared in fine-grained or dust form are provided with binders, in particular sand ($SiO_2$) and, optionally, lime, for the purpose of slagging are fed to the smelting furnace, in particular a shaft furnace, such as a blast furnace or cupola furnace or a rotary furnace in which a metal smelting process takes place, by injection in the region of the smelting zone and, on passing through the smelting zone, are bound by chemical conversion to the slag which contains a high proportion of quartz and which is drawn off at the slag tuyere of the slag unit and immediately blown to produce elastically flexible glass wool in which the waste substances are essentially molecularly bound and indissolubly occluded, the proportion of quartz in the slag being approximately in the range from 45 to 70 % by weight and preferably between 55 and 60 % by weight as a result of an appropriately high proportion of quartz in the binder introduced into the smelting zone or in the waste substances themselves to be treated.

2. Process according to claim 1, characterised in that the proportion of the organic and inorganic residual toxic substances in the slag is as far as possible in the range from 0.5 to 2 % by weight and is not more than 10 % by weight.

3. Process according to claim 1 or 2, characterised in that the waste substances, together with the binders, are prepared and blown by using primary energy from the melt to produce glass wool.

4. Process according to one or more of the preceding claims, characterised in that exothermic waste substances and/or further fuels such as, for example, coal dust, town gas, natural gas are added to the waste substances in order to counteract any drop in the temperature in the smelting zone due to heating and converting the waste substances and, in particular, the binders fed in.

5. Process according to one or more of the preceding claims, characterised in that the proportion of the waste substances, binders and fuels fed in is not more than 50 % by weight of the total throughput, which consists of metal melt and slag, and is as far as possible in the range from 15 to 28 % by weight.

6. Process according to one or more of the preceding claims, characterised in that, after appropriate preparation and possibly mixing with appropriately prepared binders and fuels, the waste substances are injected into the smelting zone of the smelting operation by means of a pneumatic feed system.

7. Process according to claim 6, characterised in that the waste substances and possibly the further substances mixed therewith are injected or introduced both by addition to combustion air and by a separate pneumatic feed system.

8. Process according to one or more of the preceding claims, characterised in that, if proportions of the waste substances supplied have been added to them, the flue gases are subjected to a multistage purification process in which there is in each case one stage of a 2-stage wet absorption inserted downstream of the standard process of purification by filtration for the alkaline and for the acid gas range.

9. Process according to one or more of the preceding claims, characterised in that the fibre thickness of the glass wool is at least 1 mm.

10. Process according to one or more of the preceding claims, characterized in that, for the purpose of perfect conversion to the slag stage, the waste substances are at least partially briquetted and added to the feedstock substances.

**Revendications**

1. Procédé pour l'élimination et le recyclage de déchets, en particulier de poussières de déchets toxiques, les déchets étant renfermés dans un produit scorifié qui se compose de scories produites lors de l'activité d'un four à fusion, tel qu'un haut fourneau, un four de cémentation etc., **caractérisé en ce** que les déchets préparés en grains fins ou sous forme de poussière, qui sont pourvus, pour la scorification, de liants tels que le sable ($SiO_2$) et le cas échéant la chaux, sont amenés par insufflation au four à fusion, en particulier à un four à cuve tel qu'un haut fourneau ou un four de seconde fusion ou à un four tournant, dans lequel a lieu une opération de bain de fusion, dans le rayon de la zone de fusion et sont liés, lors de leur passage dans la zone de fusion, aux scories qui présentent un haut pourcentage de quartz par transformation chimique, scories qui sont écrémées au trou de coulée de laitier des agrégats des scories et soufflées directement en laine de verre flexible de manière élastique dans laquelle les déchets sont liés de manière substantiellement moléculaire et renfermés de manière insoluble, le pourcentage en quartz des scories étant approximativement de l'ordre de 45 à 70 % en poids par un pourcentage en quartz élevé en conséquence des liants amenés dans la zone de fusion ou des déchets à traiter euxmême et se situant de préférence entre 55 et 60 % en poids.

2. Procédé selon la revendication 1, **caractérisé en ce** que le pourcentage des substances toxiques résiduelles organiques et anorganiques des scories est, dans la mesure du possible, de l'ordre de 0.5 à 2 % en poids et est de 10 % en poids au maximum.

3. Procédé selon la revendication 1 ou 2, **caractérisé en ce** que les déchets sont préparés et insufflés ensemble avec les liants en utilisant l'énergie primaire de la fusion pour produire la laine de verre.

4. Procédé selon l'une ou plusieurs des revendications précédentes, **caractérisé en ce** que les déchets sont mélangés à des déchets exothermiques et/ou à d'autres combustibles tels que, par exemple, la poussière de charbon, le gaz de ville, le gaz naturel pour contrer une baisse de la température dans la zone de fusion par chauffage et transformation des déchets ainsi qu'en particulier des liants amenés.

5. Procédé selon l'une ou plusieurs des revendications précédentes, **caractérisé en ce** que le pourcentage des déchets, liants et combustibles amenés est d'au maximum 50 % en poids de la quantité passée totale, constituée du bain de fusion et des scories et qu'il est, dans la mesure du possible, de l'ordre de 15 à 28 % en poids.

6. Procédé selon l'une ou plusieurs des revendications précédentes, **caractérisé en ce** que les déchets, après avoir été traités de manière correspondante et, le cas échéant, mélangés à des liants et combustibles traités en conséquence, sont soufflés dans la zone de fusion de l'opération de fusion par refoulement pneumatique.

7. Procédé selon la revendication 6, **caractérisé en ce** que l'insufflation ou l'introduction des déchets, et le cas échéant d'autres substances qui leur sont mélangées, se fait aussi bien par mélange à l'air de combustion que par refoulement pneumatique séparé.

8. Procédé selon l'une ou plusieurs des revendications précédentes, **caractérisé en ce** que les gaz de fumée du four à fusion, lorsqu'ils sont mélangés à des fractions des déchets amenés, sont soumis à un processus de nettoyage en plusieurs phases, une phase d'une absorption humide en deux phases étant intercalée à la suite du processus habituel de nettoyage par filtration respectivement pour la zone gazeuse alcaline et pour la zone gazeuse acide.

9. Procédé selon l'une ou plusieurs des revendications précédentes, **caractérisé en ce** que l'épaisseur du fil de laine de verre est au moins d'1 mm.

10. Procédé selon l'une ou plusieurs des revendications précédentes, **caractérisé en ce** que les déchets sont briquetés au moins partiellement pour leur transformation parfaite à l'état de scories et sont ajoutés aux substances de la charge.

Oberschlag - Wirtschaftlichkeit

| A) | Zur Information | Gewicht / Menge | Betrag/ Einheit | Betrag / Jahr | Bemerkung |
|---|---|---|---|---|---|
| 1) | Anfall Sondermüll BRD = | min 3 000 000 Ja/to | | | Lt. WM-Bonn |
| 2) | Erzeugung Roheisen BRD  = | ca.30 000 000 Ja/to | 200 DM/to | 6 000 000 TDM | |
| 3) | Erzeugung Roheisen / Anlage = | 3 000 000 Ja/to | 200 DM/to | 600 000 TDM | |
| 4) | Einsatz Sondermüll / Anlage = | ca.   300 000 Ja/to | 500 DM/to | 150 000 TDM | |
| 5) | Erzeugung Glaswolle / Anlage = | ca.   600 000 Ja/to | 500 DM/to | 300 000 TDM | |
| B) | Analyse - Kosten | | | | |
| 1) | Entwicklung - Verfahren | Amortisation 1 Jahr | 500 TDM | 500 TDM | |
| 2) | Investition - Anlage | Amortisation 5 Jahre | 50 000 TDM | 10 000 TDM | |
| 3) | Kosten - Rohstoff - $SiO_2$ | incl. Frachtkosten x 300 000 Ja/to | 25   DM/t | 7 500 TDM | |
| 4) | Kosten - Energie | ca. 15 % C-Staub = 600 000 x 0,15 = 90 000 Ja/to | x   400   DM | 3 600 TDM | |
| 5) | Kosten - Betrieb | | | | |
| 6) | Erlöse - Sondermüll-Beseit./Anl. | 300 000 Ja/to | x   500   DM/to | 150 000 TDM | |
| 7) | Erlöse - Verkauf - Glaswolle | 600 000 Ja/to | x   500   DM/to | 300 000 TDM | |
| 8) | Erlöse - Unterlizenzen | | | | |

*Fig. 1*

EP 0 340 644 B1

Fig. 2

Fließbild Sondermüll Recycling

Wärmerückgewinnung

Kühlung — Absorption — Absorption — Filtration

Glaswolle - Produktion

Herstellung Glaswolle - Gipsplatten

Produktion Glaswolle

Schacht- ofen (Hochofen) (Kupolofen)

Saure Schlacke

Roheisen Schmelzgut

FeO+Schrott+CaO+C

Erdgas

IV.

Mischung

Eindüsung

I.

CaO +anorg. + org. Sonder- müll

II.

Quarzsand SiO$_2$

Quarzsand

III.

Kohlen- staub

Heizmittel

Förderung ← Filterstaub (Giftmüll)

Förderung

Feinung

Transport

Transport

Wärmerück- gewinnung

Produktion aller Industrien

Absorption — Absorption

Filtration

Produktion Grobmüll

Glas- wolle Prod.

Roh- eisen Prod.

Hochofen

spez. Schlacke

Roheisen

RG - Kühlung

RG - Vorabsorption

RG - Filterung

spez. Stufe Absorption

Stufe 2

Emission laut TA - Luft

Ausblas- kamin

Fig. 3

RG : Rauchgas

EP 0 340 644 B1